# EUROPEAN PATENT APPLICATION

(11) **EP 4 548 742 A1**
(43) Date of publication of application: **07.05.2025**
(21) Application number: 24211168.0
(22) Date of filing: 06.11.2024
(51) Int. Cl.: A01D 34/81, A01D 34/82

(54) **SYSTEMS, COMPONENTS, AND METHODS FOR NOISE REDUCTION IN A LAWNMOWER**

(30) Priority: 06.11.2023 US 202363596401 P
(71) Applicant: Techtronic Cordless GP, Anderson, SC 29621 (US)
(72) Inventor: Dawud, NUNES GHAZALEH, Anderson, 29621 (US); Jordan Shane, CRAVEN, Anderson, 29621 (US)
(74) Representative: Zimmermann & Partner Patentanwälte mbB

(57) **Abstract**

A lawnmower including a mower deck including a skirt defining a volume bounded by a lip, wherein the skirt comprises a first material; a plurality of wheels supporting the mower deck; a motive device supported by the mower deck; a cutting implement driven by the motive device; and a shroud disposed at the lip, wherein the shroud comprises a second material having greater sound-affecting characteristics than the first material.

## Description

### CROSS-REFERENCE TO RELATED APPLICATIONS

The present application claims priority to U.S. Provisional Application Serial No. 63/596,401 filed on November 6, 2023, the disclosure of which is incorporated by reference herein in its entirety.

### FIELD

The present disclosure relates generally to lawnmowers, and more particularly to lawnmower components that reduce noise emitted from the lawnmower.

### BACKGROUND

Lawnmowers include cutting implements having cutting surfaces that typically move at high speeds to cut grass and other organic material. An onboard motor or engine drives the cutting implements to rotate about an arc at speeds averaging in excess of 3000 revolutions per minute (RPM). As a result, the cutting implements generate noise that can be heard by the operator and nearby people.

Accordingly, improved lawnmowers are desired in the art. In particular, lawnmowers which provide quieter operation would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a lawnmower is provided. The lawnmower includes a mower deck including a skirt defining a volume bounded by a lip, wherein the skirt comprises a first material. The lawnmower further includes a plurality of wheels supporting the mower deck and a motive device supported by the mower deck. The lawnmower further includes a cutting implement driven by the motive device. The mower further includes a shroud disposed at the lip, wherein the shroud comprises a second material having greater sound-affecting characteristics than the first material.

In accordance with another embodiment, a method of retrofitting a noise reducing component to a lawnmower is provided. The method includes repositioning the lawnmower to permit installation of a shroud at a lip of a skirt of a mower deck of the lawnmower, wherein the shroud is formed from an acoustic-affecting material. The method further includes aligning at least a portion of a channel of the shroud with a portion of the lip, wherein the lip bounds a volume housing a cutting implement. The method further includes translating the portion of the shroud towards the lip to engage the portion of the lip in the channel. The method further includes continuing to translate the shroud towards the lip until the shroud is engaged with the lip around an entire perimeter of the volume. The method further includes repositioning the lawnmower to a ready-state orientation for a mowing operation.

In accordance with another embodiment, a shroud for a lawnmower to reduce noise emanating from a mower deck of the lawnmower is provided. The shroud includes a body defining a generally circular shape corresponding to a shape of the mower deck. The body includes an inner segment configured to be disposed within a volume of the mower deck. The body further includes an outer segment configured to be disposed outside the volume. The body further includes a channel extending into the body at a location between the inner segment and the outer segment. The channel is shaped to receive a lip of the mower deck.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a top perspective view of a mower deck of a walking lawnmower in accordance with embodiments of the present disclosure;
FIG. 2 is a bottom perspective view of the mower deck in accordance with embodiments of the present disclosure;
FIG. 3 is a cross-sectional side view of the mower deck as seen along Line 3-3 in FIG. 2 in accordance with embodiments of the present disclosure;
FIG. 4 is a cross-sectional side view of the mower deck as seen along Line 3-3 in FIG. 2 in accordance with embodiments of the present disclosure;
FIG. 5 is a cross-sectional side view of the mower deck as seen along Line 3-3 in FIG. 2 in accordance with embodiments of the present disclosure;
FIG. 6 is a cross-sectional side view of the mower deck as seen along Line 3-3 in FIG. 2 in accordance with embodiments of the present disclosure; and
FIG. 7 is a flow chart of a method of retrofitting a shroud to a mower deck in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, embodiments described herein permit quieter operation of a power tool. In particular, the embodiments described herein allow for quieter operation of a lawnmower having a rotating cutting implement disposed at least partially within a mower deck. The cutting implement is driven to rotate at high speeds (e.g., in excess of 2,500 revolutions per minute (RPM), such as in excess of 3,000 RPM, etc.) by an onboard engine or motor. As the cutting implement rotates, aerodynamic effects of the cutting implement cause air to displace from a leading edge of the cutting implement. This aerodynamics generates a whooshing or humming sound which emanates from the mower deck and can be heard by the operator and nearby people, animals, and the like. The sound profile of the noise, i.e., the pitch, loudness, and other characteristics of the noise, may be influenced by the shape of the cutting implement, the speed at which the cutting implement is moving, attributes of the motive unit (e.g., engine or motor), the type of grass being cut, the operating conditions (e.g., wet or dry grass), vibration of the lawnmower, soil conditions, debris and contamination disposed at or above the soil (e.g., sticks, rocks, etc.), or the like. This variable sound profile makes capturing and mitigating noise leakage difficult to achieve over a wide range of potential working and environmental conditions.

The embodiments described herein permit quieter operation of the lawnmower (or another type of suitable power tool) by capturing (absorbing) and/or internally reflecting sound emitted by the cutting implement within the mower deck. One or more of the components described herein may absorb incident sound waves generated by the cutting implement. When the sound waves enter the component(s) described herein, some of the energy of the sound waves can be dissipated and/or converted into heat through friction. Other energy of the sound waves can reflect from the component(s) and remain in the mower deck. The reflected energy may interfere with additional sound emitted from the cutting implement, thereby reducing further noise generated by the cutting implement. Additionally, the reflected energy may be again reflected by the component(s) at the same or different location(s), trapping the sound energy within the mower deck. In this regard, the noise generated by the cutting implement can more fully dissipate within the mower deck prior to escaping, resulting in a quieter operation of the lawnmower as experienced by a nearby person or the lawnmower operator.

In an embodiment, the noise-reducing component includes a shroud disposed at a lip of the mower deck. The lip forms a lower surface of the mower deck, defining an egress location for sound waves to exit a volume in which the cutting implement is housed. While the mower deck may be height adjustable between two or more different height settings, the lip is generally spaced apart from the ground (or at least the underlying soil) in all (or most) height settings to permit the lawnmower to easily traverse the ground. As a result, a gap is formed between the lip and the ground. A majority of sound generated by the cutting implement escapes from the mower deck through this gap. The shroud fills some of the gap by extending the mower deck closer to the ground. However, in some implementations the gap size may remain the same as the mower deck may be lifted from the ground by an equal distance to prevent the shroud from dragging on the ground.

The shroud may extend around a majority, such as an entire circumference, of the volume housing the cutting implement. In this regard, noise leakage from the volume can be reduced in all directions. In some implementations, the shroud includes a channel. The channel can be sized to fit over the lip of the mower deck. In an embodiment, the channel forms an interference fit with the lip to prevent the shroud from detaching from the mower deck. In other embodiments, the shroud can be additionally, or alternatively, prevented from detaching from the mower deck by a mechanical fastener, by an adhesive, through a mechanical deformation process such as crimping the skirt around the shroud, or through another technique. The shroud can be tightly positioned along the lip such that noise is prevented from escaping between the shroud and the lip.

The shroud can be formed from an acoustic-affecting material, and more particularly a sound-reducing material, such as a sound-reflecting material and/or a sound-absorbing material. In some implementations, the shroud is formed from a sound-reflecting material and a sound-absorbing material. The shroud can prevent noise from escaping from the volume housing the cutting implement by reflecting sound internally within the volume, by absorbing sound generated within the volume, or both. In some instances, the shroud can reduce sound emitted from the cutting implement to an external environment (e.g., where a nearby person may be standing) by at least 0.1 dB, such as by at least 0.2 dB, such as by at least 0.3 dB, such as by at least 0.4 dB, such as by at least 0.5 dB, such as by at least 1 dB, such as by at least 1.5 dB, such as by at least 2 dB.

The shroud can define a porosity which increases surface area of the shroud. In some implementations, the porosity can be greater along an internal segment of the shroud. That is, the internal segment of the shroud can have a higher porosity than an external segment of the shroud. In this regard, the internal segment can entrap a greater amount of sound energy dissipated by the cutting implement.

In some implementations, the shroud can have a homogenous composition, or a generally homogenous composition, such that sound mitigation is uniform, or generally uniform, in all directions. In other implementations, the shroud can have a heterogeneous composition, including two or more areas with different sound-affecting characteristics. Heterogeneous composition may be desirable in view of mower decks having particular shapes and/or structures. For example, mower decks with cutouts for bagging may incur large noise leakage from the cutouts when a bagging unit is not connected therewith. Use of a shroud having greater noise-affecting attributes at the cutout may be desirable. Alternatively, some mower decks may have sound-blocking components (like wheels) that provide sound dampening in one or more directions. For example, the sound-blocking components may be located in front and behind the mower deck. These sound-blocking components can reduce sound leakage from the front and back of the mower deck. The shroud can have a relatively low acoustic-affecting characteristic at the front and back sides and a relatively high-acoustic-affecting characteristic at the lateral sides where the sound-blocking components are not present. In this regard, the shroud can target particular locations where noise leakage is greater while reducing the size and weight of the shroud where extra damping is not necessary.

By way of non-limiting example, the shroud can be formed from a foam, such as acoustic foam, polyurethane foam, melamine foam; a synthetic material, such as an elastomer, styrene-butadiene rubber (SBR), polybutadiene rubber (BR), ethylene propylene diene monomer (EPDM), nitrile rubber (NBR), neoprene (CR), silicone rubber (VMQ), acrylonitrile butadiene styrene (ABS), fluoroelastomer (FKM), thermoplastic elastomer (TPE), polyisoprene (IR); a fabric or textile; an insulation material, such as mineral wool, fiberglass, cellulose; a composite material such as mass loaded vinyl (MLV); a natural material, such as cotton batting, wool, bamboo, or natural rubber; or any combination thereof. In some embodiments, the shroud can include a filler, such as graphite, glass, aromatic polyester (EKONOL^{®}), bronze, zinc, boron nitride, carbon and/or polyimide. The shroud can also, or alternatively, include a surface coating, such as a sound absorbing and/or sound reflecting paint, a moisture resistance coating, a fire resistance coating, a durable coating that prevents premature wear of the underlying shroud, or the like. In some instances, the shroud can be surrounded by a rigid mesh or containment structure which protects relatively soft material of the shroud against impact by pebbles, sticks, and other flying debris ejected radially outward by the cutting implement during use of the lawnmower. In an embodiment, the shroud can include an internal skeleton with an overmolded body. The skeleton can form a rigid internal supporting structure that provides strength and integrity to the overmolded (softer, acoustic-affecting) body. In some instances, the skeleton can be exposed from the overmolded body at one or more locations. The exposed portion(s) of the skeleton may be in the form of regularly-spaced ribs. The exposed portion(s) can provide resistance against wear in the event hard and/or sharp debris is ejected radially outward from the cutting implement toward the shroud.

In an embodiment, the shroud can be segmental, including a plurality of segments that together extend around the perimeter of the volume housing the cutting implement. The segments can be shaped and sized to accommodate particular mower deck configurations and use cases. For example, where a cutout for bagging exists, the shroud can have a first segment that accommodates the non-cutout portion of the mower deck and a second segment that accommodates the cutout portion of the mower deck. When the bagging unit is connected with the mower deck, the second segment can be removed. However, when the bagging unit is not connected with the mower deck, the second segment can be installed to mitigate noise leakage through the cutout. Yet other configurations and segmentation considerations are contemplated herein.

When viewed in cross section, the shroud can have an inner segment, an outer segment, and a central segment disposed between and connecting the inner and outer segments. The inner segment is disposed within the volume housing the cutting implement. The outer segment is disposed outside the volume. The central segment extends below the lip and effectively extends the length of the mower deck in the vertical direction.

In some implementations, the inner segment of the shroud defines an inner sidewall having a shape that mitigates noise leakage. For example, the inner sidewall can be canted relative to a central axis of the volume housing the cutting implement. The canted inner sidewall can be canted in an upward direction such that sound energy impacting against the inner surface is deflected back into the volume towards a closed upper surface of the volume. As a result, the sound energy is caused to impact multiple surfaces, thereby reducing the strength of the sound energy and mitigating noise. In another embodiment, the inner sidewall can include a convex cross-sectional profile, or a convex portion of the cross-sectional profile. The convex cross-sectional profile can cause the sound energy to reflect off the shroud in a non-uniform direction, thereby diffusing the sound energy over a greater angular spray which increases the chance the sound energy impacts with another sound-absorbing surface prior to leaking from the mower deck. In yet another embodiment, the inner sidewall can include a concave cross-sectional profile, or a concave portion of the cross-sectional profile. The concave cross-sectional profile can absorb greater amounts of sound energy and/or diffuse sound energy over a greater angular spray which increases the chance the sound energy impacts with another sound-absorbing surface prior to leaking from the mower deck. In yet a further embodiment, the inner sidewall can include a combination of a concave portion and a convex portion, or a combination of a concave portion and a canted portion, or a combination of a convex portion and a canted portion, or a combination of a concave portion, a convex portion, and a canted portion. Yet other cross-sectional profiles are contemplated herein.

The shroud may be part of the lawnmower, such as attached to the lawnmower, during manufacturing of the lawnmower. Alternatively, the shroud may be installed on the lawnmower by a distributor or vendor downstream of production. Yet alternatively, the shroud may be installed by a user (e.g., the owner of the lawnmower) or a service technician. In some implementations, one shroud can fit a wide range of differently sized and/or shaped lawnmowers. That is, the shroud can be adaptable over a wide range of use cases. Such implementation can reduce production costs, purchase cost, and make sourcing easier on the installer. In other implementations, the shroud can be selected from a plurality of different shrouds each having a specific size, shape, and/or configuration to permit precise alignment with the features and characteristics of a particular lawnmower. Such implementation may allow noise reduction to increase as the shroud can be particularly sized and shaped to accommodate specific characteristics of each lawnmower.

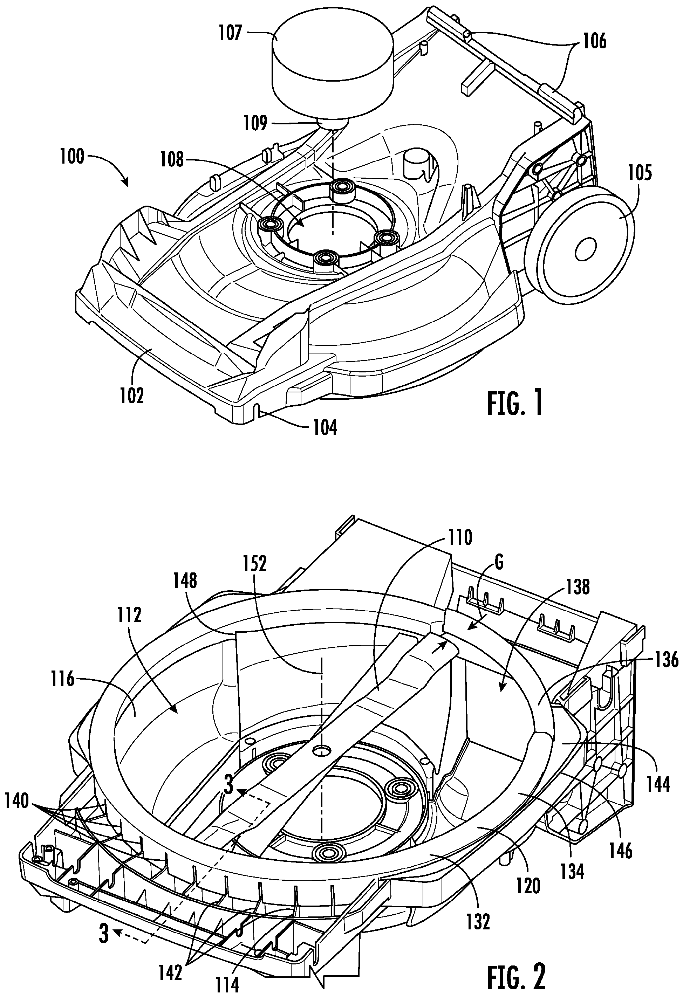

Referring now to the drawings, FIG. 1 illustrates a top perspective view of a mower deck 100 in accordance with an example embodiment. The mower deck 100 includes a body 102 and can define at least one axle slot 104 through which an axle can extend to interface with a wheel 105, or a plurality of wheels, to support the mower deck 100 on a ground surface. The mower deck 100 can further include a handle interface 106 to interface with a handle (not illustrated). In an embodiment, the body 102 can define an aperture 108 through which a motive device 107, such as a battery-powered motor or an engine, or motor drive axle 109 can extend to rotatably drive a cutting implement 110 (FIG. 2) of the lawnmower. The cutting implement 110 can include a single blade, a plurality of blades, a string, a chain, or the like.

The mower deck 100 can be formed from a relatively resilient material, such as a rigid polymer, a metal, an alloy, or a combination thereof. In an embodiment, the mower deck 100 can be formed from a single, unitary piece. For instance, the mower deck 100 can be formed through an injection molding process where substantially all of the mower deck 100 is formed in a single shot. Additional layers and components, such as bumpers, fairings, and the like (not illustrated), can be coupled to the mower deck 100 to increase structural integrity and operational functionality.

The depicted mower deck 100 is for a walk behind lawnmower. In one embodiment, the walk behind lawnmower is at least partially propelled along the ground surface by a drive motor interfaced with at least one of the wheels. In another embodiment, the walk behind lawnmower can be a push lawnmower that is not propelled by a drive motor interfaced with the wheels. In other embodiments, the mower deck 100 can be used with a riding lawnmower (such as a zero-turn radius (ZTR) mower or a tractor mower) or an autonomous (robotic) lawnmower.

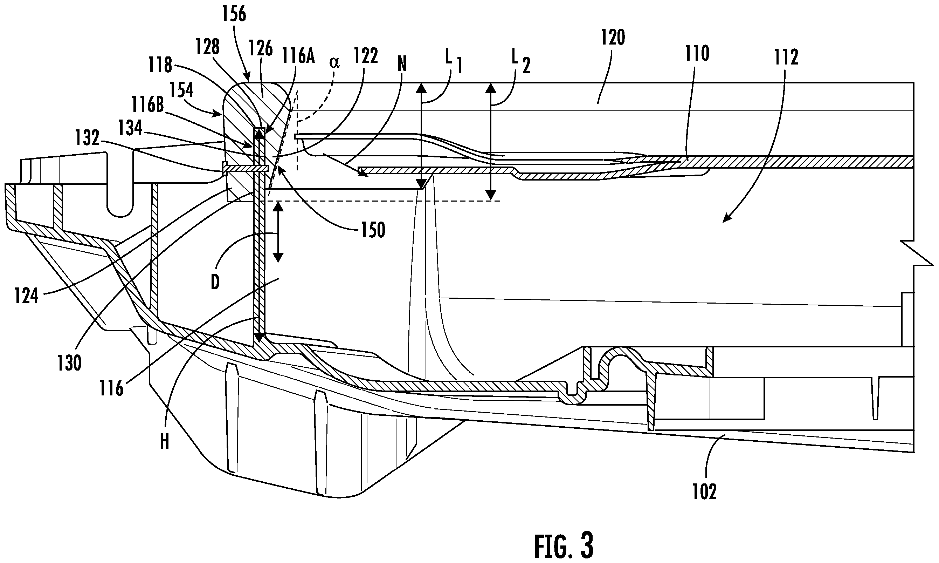

Referring to FIG. 2, the mower deck 100 defines a volume 112 in which the cutting implement 110 is at least partially, such as fully, disposed. The volume 112 is accessed from an underside 114 of the mower deck 100. The volume 112 can be bounded by a skirt 116. The skirt 116 can be part of the body 102 of the mower deck 100. For instance, the skirt 116 can be unitary with the body 102 (i.e., formed from a single piece). The skirt 116 can define an ovular shape, e.g., a circular, or generally circular, shape, having toroidal sidewalls terminating at a lip 118 (FIG. 3). In an embodiment, the lip 118 can define a lowermost boundary of the volume 112. For example, an imaginary plane oriented with the lip 118, or a best fit line associated therewith, can delimit the volume 112. In some instances, the lip 118 can define a lowermost portion of the body 102. In this regard, the skirt 116 can protect against lateral discharge of debris that may otherwise be ejected from the volume 112 by movement of the cutting implement 110 during cutting operations. In some instances, at least some of, such as all of, the skirt 116 can be coated in a sound-dampening material, such as a sound dampening foam, fabric, flocking, paint, or the like. One or more flanges, tines, fingers, or other projections can extend from the lip 118 or any other portion of the skirt 116 to provide sound-affecting (e.g., sound reducing) or debris capturing benefits.

In an embodiment, the height of the mower deck 100 is adjustable relative to the underlying ground surface. For example, the mower deck 100 can be raised and lowered by adjusting a user interface (e.g., a mechanical linkage) associated with the lawnmower. The relative position of the lip 118 changes relative to the underlying ground surface as part of height adjustment. When the mower deck 100 is in a lowest height setting, the lip 118 is most proximate to the ground surface. Conversely, when the mower deck 100 is in a highest height setting, the lip 118 is most spaced apart from the ground surface.

Noise emanates (i.e., leaks) from the mower deck 100 primarily through a gap formed between the lip 118 and the ground surface. The amount of noise emanating through the gap may change based on the distance between the lip 118 and the ground surface. For example, noise emanation may be greatest when the mower deck 100 is at or near the highest height setting and least when the mower deck 100 is at or near the lowest height setting. It should be understood that even in the lowest height setting (or usable height setting during typical mowing operations), there is typically a gap between the lip 118 and the ground surface. That is, even in the lowest setting, the lip 118 does not contact the ground surface and the gap exists. Thus, noise leaks from the mower deck regardless of the set height of cut.

FIG. 3 illustrates a cross-sectional view of the mower deck 100 as seen along line 3-3 in FIG. 2. Referring to FIGS. 2 and 3, the mower deck 100 can include a shroud 120 disposed proximate to the lip 118. In an embodiment, the shroud 120 can be disposed at the lip 118, such as wrapped around a leading end 128 of the lip 118. The shroud 120 can extend from an inner sidewall 116A of the skirt 116 to an outer sidewall 116B of the skirt 116. For instance, the shroud 120 can include an internal (inner) segment 122 and an external (outer) segment 124 coupled together by a middle (central) segment 126. The internal segment 122 can be disposed along, e.g., adjacent to, the inner sidewall 116A of the skirt 116 and the external segment 124 can be disposed along, e.g., adjacent to, the outer sidewall 116B. The middle segment 126 can be disposed at, e.g., adjacent to, the leading end 128 of the lip 118. In this regard, the internal segment 122 is disposed within the volume 112 and the external segment 124 is disposed outside of the volume 112.

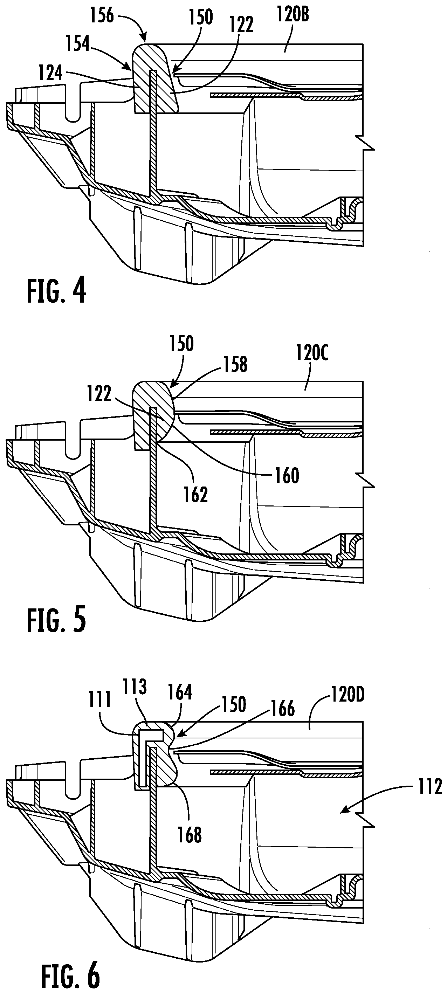

In an embodiment, the internal segment 122 and external segment 124 are configured to extend different lengths along the skirt 116, e.g., as measured in a direction D parallel to a central axis of the volume 112. The internal segment 122 can extend a first length L₁ and the external segment 124 can extend a second length L₂ that is different than the first length L₁. In an embodiment, the second length L₂ can be greater than the first length L₁. For example, L₂ can be at least 1.01 L₁, such as at least 1.05 L₁, such as at least 1.1 L₁, such as at least 1.15 L₁, such as at least 1.2 L₁, such as at least 1.25 L₁. In another embodiment, the first and second lengths L₁ and L₂ can be equal (see, e.g., FIG. 4).

Due to the internal segment 122 being disposed within the volume 112, it may be desirable for the internal segment 122 to extend a significant way into the volume 112 along the skirt 116 to provide greater surface area for sound mitigation. The skirt 116 can define a height H. L₁ can be at least 0.05 H, such as at least 0.1 H, such as at least 0.15 H, such as at least 0.2 H, such as at least 0.25H, such as at least 0.3H, such as at least 0.35H, such as at least 0.4H. Since the shroud 120 provides acoustic-affecting benefits to minimize noise leakage from beneath the lip 118, extending the shroud 120 further along the skirt 116 can increase noise management by internally dampening sound energy within the volume 112. In certain instances, extending the shroud 120 too far into the volume 112 can interfere with the action of the cutting implement 110 or even cause bogging down of the cutting implement 110 due to debris capture between the end of the cutting implement 110 and the shroud 120. While it is contemplated herein to extend the shroud 120, and more particularly the internal segment 122 of the shroud 120, far into the volume 112, in some implementations, L₁ is no greater than 0.9 H, such as no greater than 0.75 H, such as no greater than 0.5 H.

In an embodiment, the internal segment 122, the external segment 124, and the middle segment 126 are coupled together. For example, the internal, external, and middle segments 122, 124, 126 can be coupled together through a fastener, an adhesive, sonic welding, a tongue-and-groove attachment protocol, or the like. Such multi-piece construction can allow the internal, external, and middle segments 122, 124, 126 to be formed from different materials, thereby allowing the shroud 120 to exhibit different attributes at different locations. For example, the internal segment 122 can be formed to have high sound reflectance and be reinforced to prevent damage in the case where flying debris impacts the internal segment 122. The middle segment 126 can be ruggedized to prevent puncture in the case where the lawnmower runs over sharp rocks or sticks. The external segment 124 can have a soft composition to protect the mower deck 100 against impact with tall objects such as fenceposts, rocks, trees, coping, or the like.

In another embodiment, the internal segment 122, the external segment 124, and the middle segment 126 can be formed from a single, monolithic piece. Single piece shrouds 120 may exhibit increased longevity as a result of their monolithic construction and may be less expensive and easier to produce, particular in large quantities.

In some instances, the shroud 120 can be formed over a skeleton 111 (FIG. 6). The skeleton 111 can include, for example, a relatively rigid construction that provides memory and shape to the shroud 120. An outer body 113 of the shroud 120 (sometimes referred to as the body of the shroud) can be overmolded on the skeleton 111, e.g., with an injection molding technique.

A channel 130 extends into the shroud 120. The channel 130 can be disposed between the internal segment 122 and the external segment 124. The shroud 120 can be installed on the mower deck 100 by aligning the channel 130 of the shroud 120 with the lip 118 of the mower deck 100 and translating the shroud 120 towards (onto) the lip 118. In an embodiment, the shroud 120 can be translated towards the lip 118 until the leading end 128 of the lip 118 contacts the middle segment 126 of the shroud 120.

In an embodiment, the shroud 120 can be retained on the lip 118 by a fastener, such as a mechanical fastener 132, an adhesive 134, or any combination thereof. While the adhesive 134 is depicted between the inner sidewall 116A of the lip 118 and the shroud 120, the adhesive 134 may also, or alternatively, be disposed at another location between the lip 118 and the shroud 120. In other embodiments, the shroud 120 can be retained on the lip 118 by a frictional (interference) fit, a ribbed interface formed between the shroud 120 and the lip 118, or another attachment structure or arrangement. In an embodiment, the shroud 120 can be removable from the mower deck 100 to permit operation of the lawnmower without the shroud 120, replacement or repair of the shroud 120, or for another reason. In some instances, the shroud 120 may become worn over time or damaged due to impact of a sharp object. The shroud 120 may not reduce noise emanation after significant wear or damage. The worn shroud 120 can be replaced with a new shroud 120 by removing the existing shroud 120 and installing a new shroud 120 in its place.

The shroud 120 can include a generally annular body 132 with a shape corresponding to the lip 118 of the skirt 116. In an embodiment, the shroud 120 can extend around at least 20% of a perimeter of the volume 112, such as at least 40% of the perimeter of the volume 112, such as at least 60% of the perimeter of the volume 112, such as at least 80% of the perimeter of the volume 112, such as at least 95% of the perimeter of the volume 112, such as at least 99% of the perimeter of the volume 112. In an embodiment, the shroud 120 can extend around the entire perimeter of the volume 112. In an embodiment, the body 132 of the shroud 120 comprises a single, continuous body. That is, the shroud 120 can extend continuously around the entire perimeter of the volume 112. In another embodiment, the shroud 120 can include a multi-segmented body including, for example, a first segment 134 and a second segment 136. The first and second segments 134 and 136 may allow the shroud 120 to be used with different types and sizes of mower decks 100 (e.g., mower decks having different sizes or shapes) or with mower decks 100 that include discharge chutes 138 or other openings or breaks along the perimeter of the skirt 116.

The shroud 120 can include conforming features that allow the shroud 120 to rest closely against the body 102 of the mower deck 100. For example, the shroud 120 can include one or more accommodating slots 140 configured to receive ribs 142 associated with the body 102 of the mower deck 100. The shroud 120 can include one or more shaped segments, such as a flattened portion 144, to rest against a fairing 146 associated with the mower deck 100. The shroud 120 can include cutout features 148 that adapt to shapes in the skirt 116 or other aspects of the mower deck 100.

FIG. 3 illustrates a cross-sectional view of the shroud 120 as seen in accordance with an embodiment. FIGS. 4 to 6 illustrate cross-sectional views of shrouds 120B, 120C, and 120D as seen in accordance with other embodiments.

Referring initially to FIG. 3, the shroud 120 can define an inner surface 150 canted (angularly offset) with respect to a central axis 152 of the mower deck 100 (FIG. 2). In certain instances, the central axis 152 can be parallel with, such as coaxial with, an axis of rotation of the cutting implement 110. The inner surface 150 can define a negative angle α relative to the central axis 152 of the cutting implement 110. The negative angle α can be at least 1°, such as at least 5°, such as at least 10°, such as at least 15°, such as least 20°, such as at least 25°, such as at least 30°, such as least 40°. The negative angle α of the inner surface 150 of the shroud 120 can reflect and redirect noise N generated by cutting operations (more particularly noise generated by movement of the cutting implement 110 and contact between the cutting implement 110 and underlying material) in a partially upward direction away from a gap between the leading end 128 of the lip 118 and the ground. Thus, only a portion of noise generated by cutting operations escapes from the mower deck 100 through the gap between the lip 118 and the ground surface.

In an embodiment, the inner surface 150 can lie along a straight line such as depicted in FIG. 3. In the embodiment depicted in FIG. 4, the inner surface 150 lies along a straight line oriented partially downward, i.e., towards the ground. The inner surface 150 can seamlessly interface with an outer surface 154 of the shroud 120 through a transition surface 156. In an embodiment, the inner surface 150 and transition surface 156 can define a smooth transition, such as a curved interface therebetween. In another embodiment, the inner surface 150 and the transition surface 156 can meet at an angled interface. In an embodiment, the outer surface 154 and the transition surface 156 can define a smooth transition, such as a curved interface therebetween. In another embodiment, the outer surface 154 and the transition surface 156 can meet at an angled interface.

In the embodiments depicted in FIGS. 5 and 6, the inner surface 150 includes a multi-segmented profile. In the embodiment depicted in FIG. 5, the inner surface 150 includes a first segment 158 and a second segment 160. The first and second segments 158 and 160 are disposed immediately adjacent to one another. The first segment 158 lies along a generally straight line and the second segment 158 defines an arcuate profile extending between the first segment 158 and a terminal end 162 of the inner segment 122 of the shroud 120C. In the embodiment depicted in FIG. 6, the inner surface 150 includes a first segment 164, a second segment 166, and a third segment 168. The first, second, and third segments 164, 166, and 168 are disposed immediately adjacent to one another. The second segment 166 is disposed between the first and third segments 164 and 168. The first and third segments 164 and 168 each define convex profiles that extend into the volume 112 of the mower deck 100. The second surface 166 defines a concave profile.

It should be understood that the inner surface 150 may have various other surface profiles. The surface profile of the inner surface 150 may extend continuously along the entire circumferential length of the shroud 120 or may vary along the circumferential length of the shroud 120. In an embodiment, the shroud 120 can define a first surface profile at a first location along the circumferential length of the shroud 120 and a second surface profile at a second location along the circumferential length of the shroud 120, where the first and second locations are different from each other and wherein the first and second surface profiles are different from each other. Use of different surface profiles at different locations along the circumferential length of the shroud 120 may allow for tuning of noise dissipation in view of the shape of the mower deck 100, the material composition of the mower deck 100, or the like.

The shroud 120 may reduce a gap distance G (FIG. 2), as measured by a minimum distance between the cutting implement 110 and the skirt 116. For example, the shroud 120 can reduce the gap distance G by at least 5%, such as at least 10%, such as at least 20%, such as at least 30%, such as at least 40%, such as at least 50%, such as at least 60%, such as at least 70%, such as at least 80%. In some instances, the gap distance G can be reduced to approximately 0 millimeters. In other instances, the shroud 120 can overlap the cutting implement 110. For instance, the cutting implement may move within a portion of the shroud 120 defined by the second segment 166 in the shroud 120D depicted in FIG. 6. Reduction in the gap distance G can further reduce noise emanation from the gap between the lip 118 of the mower deck 100 and the ground surface.

In an embodiment, the shroud 120 can have a unitary composition, including a single-piece body. In another embodiment, the shroud 120 can include a multi-component body including a plurality of body pieces coupled together. The shroud 120 may have a homogenous composition or a heterogenous composition. Shrouds 120 with heterogenous compositions can include, for example, layers of material, such as an inner core and an outer cover. The different layers of the shroud 120 can perform different functionality. For example, the inner core can provide sound dampening. The outer cover may include a resilient mesh structure that protects the sound dampening material of the inner core. Other arrangements and configurations are possible.

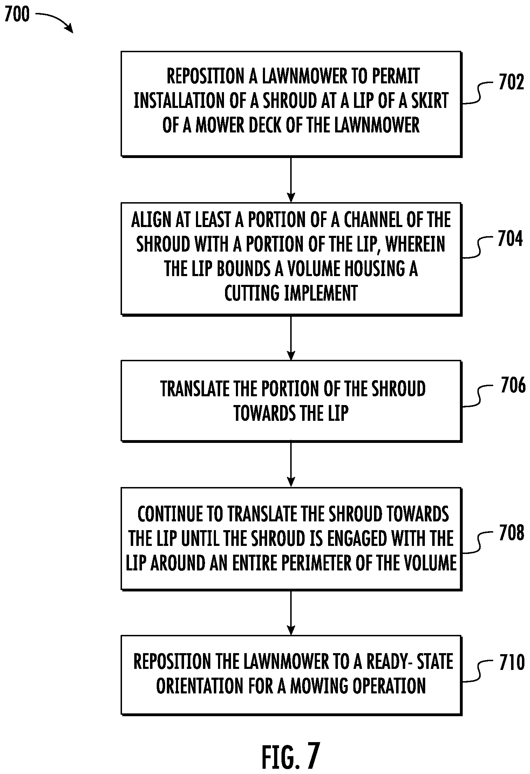

FIG. 7 illustrates a flow chart of a method 700 of retrofitting a shroud onto a lawnmower. In general, the method 700 will be described with reference to a system including the mower deck 100 and the shroud 120 described above with reference to FIGS. 1 to 6. In addition, although FIG. 7 depicts steps performed in a particular order for purposes of illustration and discussion, the method discussed herein is not limited to any particular order or arrangement. One skilled in the art, using the disclosure provided herein, will appreciate that various steps of the method disclosed herein can be omitted, rearranged, combined, and/or adapted in various ways without deviating from the scope of the present disclosure.

The method 700 is generally intended for retrofitting the shroud onto a lawnmower after a user purchases (buys) the lawnmower and is not performed during manufacturing of the lawnmower itself. However, in some instances, the manufacturer may desire to sell the lawnmower with the shroud already installed on the mower deck. In these instances, the manufacturer may perform the steps described herein.

The method 700 includes repositioning 702 the lawnmower to permit installation of the shroud at a lip of a skirt of a mower deck of the lawnmower. Repositioning 702 the lawnmower can include, for example, reorienting the lawnmower from a normal (in-use) orientation where the cutting implement is ready to perform cutting operations to an accessible orientation. Reorienting the lawnmower from the normal orientation to the accessible orientation may involve flipping the lawnmower by 90 degrees or more. Repositioning 702 the lawnmower can also, or alternatively, include lifting the lawnmower off the ground. For example, in some instances, the lawnmower may be placed on an elevated surface, such as a workbench or wheel ramps which elevate the lawnmower off the ground.

In some instances, repositioning 702 the lawnmower can include repositioning of only the mower deck. For example, riding lawnmowers may include a detachable mower deck. To access the lip for purpose of installing the shroud, the user can drop (detach) the mower deck from a supporting frame. The mower deck can then be moved independent of the supporting frame to a location for installation of the shroud.

Once the lip is in the accessible orientation, the method 700 includes aligning 704 at least a portion of a channel of the shroud with a portion of the lip. For instance, the lip may define a circumferential length L. A portion of the channel can be aligned with a portion of the length L. For example, a portion of the channel can be aligned with 5% of the length L of the lip. Aligning 704 the channel with the lip can include, for example, positioning the channel immediately adjacent to the lip. The user can perform the alignment 704 visually or use a tool to perform the alignment.

With the channel aligned 704 relative to the lip, the shroud (or at least the portion of the shroud aligned at step 704) is translated 706 towards the lip. The user can perform the translation 706 using one or two hands. For example, the user can initially push the shroud towards the lip at a first location until the first location of the shroud seats against the lip, or is at least retained temporarily at the lip. The user can then continue to translate 708 the shroud to the lip until the shroud is engaged with the lip around an entire perimeter of the volume. This may involve walking at least one of the user's hands around the shroud and pressing the shroud into the lip at multiple locations around the perimeter of the lip. A clamp can be used to secure the initial section where the shroud is translated towards the lip in order to maintain the shroud at the lip. The user can then finish securing the shroud to the lip at step 708. In some instances, the user may also secure the shroud at the lip, e.g., using a fastener, adhesive, mechanical deformation technique (e.g., crimping), or the like.

Once the shroud is fully in place, the user can reposition 710 the lawnmower to the ready-state (in-use) orientation for performing a mowing operation.

Through testing, it has been discovered that use of a shroud 120 on a mower deck 100 can reduce emanation of noise by 1 to 3 decibels (dB) at one or more different cutting heights while using a cutting implement in the form of a fixed metal blade driven at normal running speeds of approximately 3000 revolutions per minute (RPM).

Further aspects of the invention are provided by one or more of the following embodiments:
Embodiment 1. A lawnmower comprising: a mower deck including a skirt defining a volume bounded by a lip, wherein the skirt comprises a first material; a plurality of wheels supporting the mower deck; a motive device supported by the mower deck; a cutting implement driven by the motive device; and a shroud disposed at the lip, wherein the shroud comprises a second material having greater sound-affecting characteristics than the first material.
Embodiment 2. The lawnmower of embodiment 1, wherein the shroud comprises an elastomer, and wherein the shroud covers the lip with a portion of the shroud disposed on an inside of the volume and a portion of the shroud disposed on an outside of the volume.
Embodiment 3. The lawnmower of any one of embodiments 1 or 2, wherein the shroud comprises a channel, and wherein the lip extends into the channel.
Embodiment 4. The lawnmower of any one of embodiments 1 to 3, wherein the shroud defines an inner surface canted with respect to a central axis of the motive device, and wherein the canted inner surface is canted away from an opening defined by the lip.
Embodiment 5. The lawnmower of embodiment 4, wherein the inner surface has a portion with a convex cross-sectional profile.
Embodiment 6. The lawnmower of any one of embodiments 1 to 5, wherein the skirt defines a height H, wherein an inner segment of the shroud configured to be disposed within the volume extends along a portion L₁ of the height H, and wherein L₁ is at least 0.3 H.
Embodiment 7. A method of retrofitting a noise reducing component to a lawnmower, the method comprising: repositioning the lawnmower to permit installation of a shroud at a lip of a skirt of a mower deck of the lawnmower, wherein the shroud is formed from an acoustic-affecting material; aligning at least a portion of a channel of the shroud with a portion of the lip, wherein the lip bounds a volume housing a cutting implement; translating the portion of the shroud towards the lip to engage the portion of the lip in the channel; continuing to translate the shroud towards the lip until the shroud is engaged with the lip around an entire perimeter of the volume; and repositioning the lawnmower to a ready-state orientation for a mowing operation.
Embodiment 8. The method of embodiment 7, further comprising fastening the shroud to the lip using a fastener, an adhesive, or a mechanical deformation technique.
Embodiment 9. The method of any one of embodiments 7 or 8, wherein aligning the channel of the shroud comprises rotationally aligning the shroud to a correct rotational orientation based on one or more conforming features of the shroud that conform to a shape of a body of the mower deck; and radially aligning the shroud such that the channel is aligned with respect to the lip in a radial direction with respect to the volume.
Embodiment 10. The method of any one of embodiments 7 to 9, wherein translating the portion of the shroud towards the lip is performed such that a first cross-sectional portion of the shroud is disposed inside the volume, a second cross-sectional portion of the shroud is disposed outside the volume, and a third cross-sectional portion of the shroud is disposed between the first and second cross-sectional portions, and wherein translating the portion of the shroud towards the lip is performed until the lip contacts a leading end of the lip.
Embodiment 11. The method of any one of embodiments 7 to 10, wherein translating the shroud towards the lip causes the channel to lie flush against an inner sidewall of the skirt.
Embodiment 12. The method of any one of embodiments 7 to 11, wherein the shroud has an inner surface canted with respect to a central axis of the volume, and wherein the canted inner surface has a straight cross-sectional profile.
Embodiment 13. A shroud for a lawnmower to reduce noise emanating from a mower deck of the lawnmower, the shroud comprising: a body defining a generally circular shape corresponding to a shape of the mower deck, wherein the body comprises: an inner segment configured to be disposed within a volume of the mower deck; an outer segment configured to be disposed outside the volume; and a channel extending into the body at a location between the inner segment and the outer segment, wherein the channel is shaped to receive a lip of the mower deck.
Embodiment 14. The shroud of embodiment 13, wherein the body has one or more conforming features that conform to a shape of the mower deck.
Embodiment 15. The shroud of embodiment 14, wherein the one or more conforming features comprise slots configured to receive ribbing of the mower deck.
Embodiment 16. The shroud of any one of embodiments 13 to 15, wherein the inner segment has an inner surface canted with respect to a central axis of the volume.
Embodiment 17. The shroud of any one of embodiments 13 to 16, wherein the inner segment defines a first length in a direction parallel to a central axis of the volume, wherein the outer segment defines a second length in the direction parallel to the central axis of the volume, and wherein the first and second lengths are different from each other.
Embodiment 18. The shroud of any one of embodiments 13 to 17, wherein the shroud is segmental comprising a plurality of discrete segments, and wherein the plurality of segments is used together to fully surround the volume.
Embodiment 19. The shroud of any one of embodiments 13 to 18, wherein a cross-sectional profile of the inner segment is different than a cross-sectional profile of the outer segment.
Embodiment 20. The shroud of any one of embodiments 13 to 19, wherein the body further comprises one or more fastener attachment locations at which a fastener is received to couple the shroud to the mower deck.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A lawnmower comprising:
a mower deck including a skirt defining a volume bounded by a lip, wherein the skirt comprises a first material;
a plurality of wheels supporting the mower deck;
a motive device supported by the mower deck;
a cutting implement driven by the motive device; and
a shroud disposed at the lip, wherein the shroud comprises a second material having greater sound-reducing characteristics than the first material.

2. The lawnmower of claim 1, wherein the shroud comprises an elastomer, and wherein the shroud covers the lip with an internal segment of the shroud disposed on an inside of the volume and an external segment of the shroud disposed on an outside of the volume.

3. The lawnmower of claim 2, wherein the inner segment defines a first length in a direction parallel to a central axis of the mower deck, wherein the outer segment defines a second length in the direction parallel to the central axis, and wherein the first and second lengths are different from each other.

4. The lawnmower of any one of claims 1 to 3, wherein the shroud comprises a channel, and wherein the lip extends into the channel.

5. The lawnmower of any one of claims 1 to 4, wherein the shroud defines an inner surface canted with respect to a central axis of the motive device, and wherein the canted inner surface is canted away from an opening defined by the lip.

6. The lawnmower of claim 5, wherein the inner surface has a portion with a convex cross-sectional profile.

7. The lawnmower of any one of claims 1 to 6, wherein the skirt defines a height H, wherein an inner segment of the shroud configured to be disposed within the volume extends along a portion L₁ of the height H, and wherein L₁ is at least 0.3 H.

8. The lawnmower of any one of claims 1 to 7, wherein the shroud has one or more conforming features that conform to a shape of the mower deck.

9. The lawnmower of any one of claims 1 to 8, wherein the shroud is segmental comprising a plurality of discrete segments, and wherein the plurality of segments is used together to fully surround the lip of the mower deck.

10. A method of retrofitting a noise reducing component to a lawnmower, the method comprising:
repositioning the lawnmower to permit installation of a shroud at a lip of a skirt of a mower deck of the lawnmower, wherein the shroud is formed from an acoustic-reducing material, and wherein the lawnmower comprises a plurality of wheels supporting the mower deck, and a motive device supported by the mower deck;
aligning at least a portion of a channel of the shroud with a portion of the lip, wherein the lip bounds a volume housing a cutting implement driven by the motive device;
translating the portion of the shroud towards the lip to engage the portion of the lip in the channel;
continuing to translate the shroud towards the lip until the shroud is engaged with the lip around an entire perimeter of the volume; and
repositioning the lawnmower to a ready-state orientation for a mowing operation.

11. The method of claim 10, further comprising fastening the shroud to the lip using a fastener, an adhesive, or a mechanical deformation technique.

12. The method of any one of claims 10 or 11, wherein aligning the channel of the shroud comprises
rotationally aligning the shroud to a correct rotational orientation based on one or more conforming features of the shroud that conform to a shape of a body of the mower deck; and
radially aligning the shroud such that the channel is aligned with respect to the lip in a radial direction with respect to the volume.

13. The method of any one of claims 10 to 12, wherein translating the portion of the shroud towards the lip is performed such that a first cross-sectional portion of the shroud is disposed inside the volume, a second cross-sectional portion of the shroud is disposed outside the volume, and a third cross-sectional portion of the shroud is disposed between the first and second cross-sectional portions, and wherein translating the portion of the shroud towards the lip is performed until the lip contacts a leading end of the lip.

14. The method of any one of claims 10 to 13, wherein translating the shroud towards the lip causes the channel to lie flush against an inner sidewall of the skirt.

15. The method of any one of claims 10 to 14, wherein the shroud has an inner surface canted with respect to a central axis of the volume, and wherein the canted inner surface has a straight cross-sectional profile.
